(19) Europäisches Patentamt / European Patent Office / Office européen des brevets

(11) **EP 4 080 315 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **21170092.7**

(22) Anmeldetag: **23.04.2021**

(51) Internationale Patentklassifikation (IPC):
**B05B 1/08** *(2006.01)*      **B05B 12/04** *(2006.01)*
**G05D 7/06** *(2006.01)*      **A01M 7/00** *(2006.01)*

(52) Gemeinsame Patentklassifikation (CPC):
**G05D 7/0664; A01M 7/0089; B05B 1/083; B05B 12/04**

(54) **VERFAHREN ZUM BETRIEB EINER FELDSPRITZEINRICHTUNG UND FELDSPRITZEINRICHTUNG**

FIELD SPRAYER AND METHOD FOR OPERATING A FIELD SPRAYER

PROCÉDÉ DE FONCTIONNEMENT D'UN DISPOSITIF DE PULVÉRISATION AGRICOLE ET DISPOSITIF DE PULVÉRISATION AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2022 Patentblatt 2022/43**

(73) Patentinhaber:
• **IWN GmbH & Co. KG**
  **33719 Bielefeld (DE)**
• **Schulte, Reinhold**
  **33106 Paderborn (DE)**

(72) Erfinder:
• **Schulte, Reinhold**
  **33106 Paderborn (DE)**
• **Freitag, Jan**
  **33611 Bielefeld (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
**DE-A1-102009 001 532      US-A1- 2020 353 494**

**Beschreibung**

## TECHNISCHES GEBIET DER ERFINDUNG

Die vorliegende Erfindung betrifft ein Verfahren zum Betrieb einer Feldspritzeinrichtung mit mehreren elektronisch gesteuerten Feldspritzventilen und eine derartige Feldspritzeinrichtung.

Feldspritzeinrichtungen dienen der gesteuerten oder geregelten Ausbringung eines Fluids über mehrere elektronisch gesteuerte Feldspritzventile, die eine Ausbringrate (insbesondere einen Volumenstrom oder Massenstrom) steuern. Das über die Feldspritzventile ausgebrachte Fluid kann dann unmittelbar oder über eine konstante oder verstellbare Düse auf ein Feld aufgebracht werden. Die mehreren Feldspritzventile können in Längsrichtung über einen Sprühbalken eines Sprühfahrzeugs verteilt angeordnet sein und sich mit dem Sprühfahrzeug entlang des Feldes bewegen. Beispielsweise erfolgt mittels der Feldspritzeinrichtung eine Ausbringung eines Fluids in der Landwirtschaft oder dem Obst- oder Gemüseanbau, wobei es sich bei dem Fluid beispielsweise um Wasser, Dünger, ein Insektizid, ein Unkrautvernichtungsmittel oder ein beliebiges anderes Fluid oder Fluidgemisch handeln kann.

Aus Kostengründen und ökologischen Gründen soll die Ausbringung des Fluids nur in den tatsächlich relevanten Flächen des Feldes und auch nur mit der erforderlichen Ausbringrate erfolgen.

## STAND DER TECHNIK

Mit modernen Feldspritzeinrichtungen verbundene Problemstellungen sowie Lösungsansätze sind den Druckschriften DE 10 2009 001 532 A1 sowie DE 696 25 914 T2 zu entnehmen. Demgemäß kann eine Veränderung einer Ausbringrate mit erforderlichen Zwischenstellungen der Feldspritzventile wünschenswert sein je nach agrarem Einsatzzweck, einer erwarteten Drift von Sprühtropfen infolge eines Windes, der Geschwindigkeit des Sprühfahrzeugs, der gewünschten Größe des Sprühbereichs, der Höhe eines Sprühbalkens über dem Boden, einer gewünschten Tropfengröße oder einem gewünschten Spektrum der Tropfengrößen, dem gewünschten fluidischen Fluss, einem gewünschten Winkel eines Sprühkegels u. ä. Möglich ist auch, dass eine Steuerung der Ausbringrate auf Grundlage von Informationen eines Global-Positioning-Systems erfolgen soll, indem beispielsweise je nach Position auf dem Feld die Ausbringrate vorgegeben ist, beispielsweise auf Grundlage von positionsbezogenen Erntedaten der letzten Ernte.

US2020353494 beschreibt eine andere Variante der Vorrichtung, die in diesem Bereich verwendet wird.

Bekannt ist auch eine Beeinflussung eines Volumenstroms für die Ausbringung des agraren Fluids über eine Steuerung der Förderleistung einer Pumpe für die Zuführung des Fluids, eine Steuerung des Druckes in einer Zuführleitung, eine Beeinflussung eines Öffnungs-Querschnitts einer Feldspritzventils oder einen Einsatz eines Feldspritzventils in Ausbildung als pulsmoduliertes System (vgl. DE 10 2009 001 532 A1 und DE 696 25 914 T2), wobei im letztgenannten Fall über den sogenannten "Duty Cycle" oder das Tastverhältnis der kurzfristigen Öffnungszeiten des Ventils zu einer Periodendauer der Pulsweitenmodulation der zeitlich gemittelte Volumenstrom variiert werden kann. Eine Wechselwirkung der Ausbringung besteht auch zwischen dem Feldspritzventil einerseits und einer dem Feldspritzventil nachgeschalteten Spritz- oder Düseneinheit, aus welcher das Fluid in Richtung des Ackerbodens oder des mit dem Fluid zu benetzenden Guts austritt.

Feldspritzventile können als direkt gesteuerte Magnetventile ausgebildet sein, bei welchen beispielsweise ein als Ventilteller ausgebildeter Ventilkörper, der in einer Schließstellung zur Anlage an einen Ventilsitz kommt, mit einem elektromagnetischen Aktuator direkt mechanisch verbunden ist. Hierbei sind die elektromagnetischen Aktuatoren mit einer Spule und einem im Inneren der Spule bewegten Anker gebildet, wobei der bewegliche Anker mit dem Ventilkörper gekoppelt ist. Der elektromagnetische Aktuator muss eine Öffnungskraft erzeugen, die abhängig ist von der Größe des Ventiltellers sowie der Druckdifferenz zwischen einer Primärleitung und einer Sekundärleitung des Feldspritzventils (vgl. DE 10 2013 101 460 A1).

EP 2 227 949 A1 offenbart den grundsätzlichen Aufbau einer Feldspritzeinrichtung mit dem gesamten fluidischen Kreis und der Anordnung mehrerer Feldspritzventile an einem Sprühbalken. Hier finden Feldspritzventile mit einer pulsweitenmodulierten Steuerung der Bewegung eines Ventilkörpers Einsatz.

EP 2 979 765 B1 offenbart ein Feldspritzventil, bei welchem zwischen einer Primärleitung und einer Sekundärleitung ein Ventil angeordnet ist. Das Ventil weist einen Ventilkörper und einen Ventilsitz auf, die in einer Öffnungsstellung des Ventils einen Übertrittsquerschnitt zwischen der Primärleitung und der Sekundärleitung bilden. Der Ventilkörper ist über eine Feder in Richtung einer Schließstellung und in Richtung des Ventilsitzes beaufschlagt. Auf den Ventilkörper wirkt der Druck in der Primärleitung in Öffnungsrichtung. Das Ventil bildet ein Überströmventil, in dem mit einem Überschreiten eines Schwellwerts des Drucks in der Primärleitung der Ventilkörper von dem Ventilsitz weg bewegt wird. Somit wird das Ventil erst geöffnet, wenn mit Aufnahme der Tätigkeit einer Pumpe der Schwellwert des Drucks erreicht ist. Neben dieser passiven Überströmfunktion des Ventils kann der Ventilkörper über einen Haftmagneten in der Schließstellung gehalten werden. Hierbei wird unter einem Haftmagneten ein Elektromagnet verstanden, in welchem keine mechanische Bewegungsumsetzung erfolgt. Vielmehr verfügt der elektrische Haftmagnet über eine Spulenwicklung und einen gegenüber der Spulenwicklung nicht bewegbaren Kern. In der **Richtlinie VDE 0580** sind derartige Haftmagnete auch als "Lasthebemagnete" bezeichnet. Einsatz findet hier ein Haftmagnet in Ausbildung als rotationssymmetrischer Topfmagnet. Ein Halten des Ventils mittels des Haftmagneten ist mit einer drastisch reduzierten Leistungsaufnahme gegenüber einem Elektromagneten mit im Inneren angeordneten beweglichen Anker möglich, wobei unter Umständen dennoch hohe Haltekräfte herbeigeführt werden können. Wird mittels des Haftmagneten der Ventilkörper in der Schließstellung gehalten, kann durch den Haftmagneten die Überströmfunktion außer Kraft gesetzt werden, so dass trotz Überschreiten des Schwellwerts des Drucks in der Primärleitung das Ventil die Schließstellung beibehält. Dies soll beispielsweise genutzt werden, um durch Bestromung einzelner Haftmagnete von mehreren Feldspritzventilen an einem Sprühbalken eine Teilbreitenabschaltung herbeizuführen oder mit Bestromung sämtlicher Haftmagnete der Feldspritzeinrichtung temporär das Ausbringen für den gesamten Sprühbalken, beispielsweise bei einer Kurvenfahrt im Randbereich des Feldes, zu unterbinden. Alternativ wird vorgeschlagen, dass der Haftmagnet eine Öffnungsstellung des Ventilkörpers sichert, womit die Überstromfunktion mit Bestromung des Haftmagneten auch ausgelöst werden kann, wenn die Druckdifferenz zwischen dem Druck in der Primärleitung und der Sekundärleitung nicht ausreichend ist, um das Ventil in die Öffnungsstellung zu überführen.

Wirkt der Haftmagnet mit einem Anker zusammen, der mit dem Ventilkörper gekoppelt ist, ändert sich je nach Stellung des Ventilkörpers und damit des Abstandes des Ankers von dem Haftmagneten die magnetische Leitfähigkeit, der magnetische Widerstand und die Flussdichte. Bei Beaufschlagung des Haftmagneten mit einer Wechselspannung oder einem Wechselstrom ändern sich damit die Stromverläufe, die Spannung, die Impedanz und/oder eine Phasenverschiebung der elektrischen Beaufschlagung des Haftmagneten. Anhand der physikalischen Gegebenheiten kann dann eine Veränderung umgerechnet werden oder über ein Kennfeld umgewandelt werden in einen Abstand des Ankers von dem Haftmagneten, womit eine Art Sensor geschaffen ist für die Betriebsstellung des Ventilkörpers und damit die Betriebsstellung des Ventils. Hierbei kann der Sensor ein binäres Signal (geschlossen/offen), ein digitales Signal oder auch ein analoges Signal für den Abstand des Ankers von dem Haftmagneten erzeugen. Auf Grundlage der Auswertung des derart ermittelten Abstandes des Ankers von dem Haftmagneten kann dann eine Erkennung eines fehlerhaften Betriebszustandes der Agrarspritze, für welche das Ventil Einsatz findet, erfolgen. Beispielsweise kann ein Einbruch des Drucks in der Primärleitung (insbesondere infolge einer Fehlfunktion einer Pumpe oder einer Leckage in der Zuleitung) detektiert werden. Möglich ist auch, dass über den Sensor eine Verstopfung in dem Feldspritzventil, insbesondere im Bereich der Sekundärleitung, oder im Bereich einer Spritz- oder Ausbringdüse erkannt wird. Möglich ist auch, dass eine Behinderung einer Bewegung des Ventilkörpers, beispielsweise infolge eines Verschleißes oder eines Fremdkörpers im Führungsbereich des Ventilkörpers oder zwischen dem Ventilsitz und dem Ventilkörper, erkannt wird. Vorgeschlagen wird in EP 2 979 765 B1 des Weiteren, dass ein nicht stationäres elektrisches Testsignal erzeugt wird, mit dem der Haftmagnet beaufschlagt wird, wobei das Testsignal so von einer Steuereinheit vorgegeben wird, dass eine möglichst gute Messung des Abstandes des Ankers von dem Haftmagneten möglich ist. Dieses elektrische Testsignal kann beispielsweise in der Haftstellung des Ankers appliziert werden, in welcher der Anker ohnehin mit einer verhältnismäßig großen Haltekraft an dem Haftmagneten gehalten ist, so dass eine kleine oszillierende Kraft infolge des elektrischen Testsignals nicht so an dem Lösen des Ankers von dem Haftmagneten führt. Möglich ist auch, dass das Testsignal dem ansonsten genutzten elektrischen Beaufschlagungssignal des Haftmagneten überlagert wird, wobei die Amplitude des elektrischen Testsignals kleiner ist als die des elektrischen Beaufschlagungssignals. Alternativ oder zusätzlich wird vorgeschlagen, dass das Testsignal eine derartige Frequenz besitzt, dass zwar das Testsignal einen Fluss durch den Haftmagneten und den Anker bewirkt, welcher abhängig ist von dem Abstand des Ankers von dem Haftmagneten. Allerdings ist infolge der Trägheit des Ankers und des Ventilkörpers das Ventil nicht in der Lage, entsprechend dem hochfrequenten Testsignal und der hierdurch erzeugten hochfrequenten Kraft des Haftmagneten eine signifikante Änderung oder Oszillation der Stellung des Ventilkörpers herbeizuführen.

WO 2020/035443 A1 offenbart ein Feldspritzventil, welches ohne elektrische Beaufschlagung seine Öffnungsstellung einnimmt. Die Herbeiführung und Aufrechterhaltung der Schließstellung erfolgt mittels eines Haftmagneten, womit der Leistungsbedarf reduziert wird. In dem Feldspritzventil ist zwischen einer Primärleitung und einer Sekundärleitung in fluidischer Reihenschaltung ein elektronisch gesteuertes Steuerventil und ein passives Überstromventil angeordnet. Der Haftmagnet wird mittels einer Pulsweitenmodulation beaufschlagt. Aus der elektrischen Beaufschlagung des Haftmagneten soll ein Durchfluss oder ein Ausmaß einer Verstopfung des Feldspritzventils ermittelt werden. Hierzu wird der Kurvenverlauf des Stroms durch die Spule des Feldspritzventils analysiert. Insbesondere wird aus einem Maximum des Stroms während der Öffnung des Feldspritzventils auf das Ausmaß der Verstopfung geschlossen.

Weiterer Stand der Technik zu Feldspritzventilen ist bspw. aus DE 10 2011 000 921 B3 bekannt.

## AUFGABE DER ERFINDUNG

Der Erfindung liegt die Aufgabe zugrunde, ein Verfahren zum Betrieb einer Feldspritzeinrichtung und eine Feldspritzeinrichtung vorzuschlagen, die insbesondere hinsichtlich

- des Ausmaßes, in welchem die Ausbringrate verändert werden kann, und/oder
- der Steuerungs- oder Regelungsgüte und/oder
- Beeinträchtigungen des fluidischen Kreislaufs, insbesondere Druck-Pulsationen in dem fluidischen Kreislauf, und/oder
- einer Koordinierung des Ausbringverhaltens der mehreren Feldspritzventile

verbessert sind.

## LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

## BESCHREIBUNG DER ERFINDUNG

Die Aufgabe der Erfindung wird gelöst durch ein Verfahren zum Betrieb einer Feldspritzeinrichtung. Die in dem Verfahren eingesetzte Feldspritzeinrichtung weist mehrere elektronisch gesteuerte Feldspritzventile auf, die beispielsweise in Längsrichtung über einen Sprühbalken eines Sprühfahrzeugs verteilt angeordnet sein können. Die Feldspritzventile werden jeweils mittels einer Pulsweitenmodulation betrieben.

Die Erfindung berücksichtigt die Erkenntnis, dass bei einer Ansteuerung der Feldspritzventile auf Grundlage einer Pulsweitenmodulation der Beginn der Periode der Pulsweiten-Ansteuerung der einzelnen Feldspritzventile nicht beliebig sein sollte. Andererseits hat sich gezeigt, dass ein gleichzeitiger Beginn der Perioden der Pulsweiten-Ansteuerung ebenfalls nicht vorteilhaft ist. Grund hierfür ist, dass bei gleichzeitigem Beginn sämtliche Feldspritzventile gleichzeitig öffnen, was zu einem plötzlichen großen Volumenstrom für die Gesamt-Ausbringrate der u. U. großen Zahl von Feldspritzventilen führt. Hierdurch können Druckpulsationen in dem fluidischen System entstehen. Andererseits bedingt die plötzliche Entnahme des hohen Volumenstroms erhöhte Anforderungen an eine Druckregelung in dem fluidischen System. Das Entsprechende gilt auch für den Zeitpunkt der Schließung der Feldspritzventile.

Auf Grundlage dieser Erkenntnis werden in dem erfindungsgemäßen Verfahren mindestens zwei Feldspritzventile mit einem vorgegebenen Phasenversatz des Beginns der Perioden der Pulsweitenmodulation betrieben.

Dies soll vereinfacht für lediglich zwei Feldspritzventile beschrieben werden: Werden beide Feldspritzventile gleichzeitig geöffnet, ergibt sich ein plötzlicher Volumenstrom. Werden die beiden Feldspritzventile hingegen mit einem Phasenversatz geöffnet, ergibt sich mit der Öffnung des ersten Feldspritzventils lediglich ein halb so großer plötzlicher Volumenstrom und mit einer infolge des Phasenversatzes späteren Öffnung des zweiten Feldspritzventils nochmals eine plötzliche Erhöhung des Volumenstroms, deren plötzliche Änderung wiederum nur halb so groß ist wie die plötzliche Änderung bei gleichzeitiger Öffnung beider Feldspritzventile. Hierbei kann der Phasenversatz beispielsweise 180° betragen, so dass das zweite Feldspritzventil dann seine Öffnungsstellung einnimmt, wenn die halbe Periode des ersten Feldspritzventils abgelaufen ist. Das Entsprechende kann auch gelten, wenn drei, vier oder mehr Feldspritzventile verwendet werden, die dann jeweils mit einem unterschiedlichen Phasenversatz betrieben werden. Schließlich ist auch möglich, dass zwei, drei oder mehr Gruppen von Feldspritzventilen Einsatz finden, wobei dann die Feldspritzventile einer Gruppe denselben Phasenversatz aufweisen, während die Feldspritzventile der jeweiligen Gruppen einen unterschiedlichen Phasenversatz aufweisen. Die Feldspritzventile einer Gruppe können dann nebeneinander an einem Sprühbalken angeordnet sein. Vorzugsweise sind diese aber in der Reihenfolge

"erstes Feldspritzventil der ersten Gruppe → erstes Feldspritzventil der zweiten Gruppe → erstes Feldspritzventil der dritten Gruppe → ... (ggf. erste Feldspritzventile etwaiger weiterer Gruppen) → zweites Feldspritzventil der ersten Gruppe → zweites Feldspritzventil der zweiten Gruppe → zweites Feldspritzventil der dritten Gruppe → ... (ggf. zweite Feldspritzventile etwaiger weiterer Gruppen → drittes Feldspritzventil der ersten Gruppe → drittes Feldspritzventil der zweiten Gruppe → drittes Feldspritzventil der dritten Gruppe → ... (ggf. dritte Feldspritzventile einer etwaigen weiteren Gruppe) → ... (ggf. etwaige weitere Feldspritzventile einer etwaigen weiteren Gruppe entsprechend dem vorstehenden Bildungsgesetz)"

an dem Sprühbalken angeordnet. Durch Einsatz des Phasenversatzes kann somit das Ausbringverhalten verbessert werden und es können Druckpulsationen in dem fluidischen System vermieden werden.

Trotz des Phasenversatzes werden die Feldspritzventile mit derselben Frequenz der Pulsweitenmodulation und demselben Tastverhältnis betrieben. Erfindungsgemäß wird vorgeschlagen, dass eine Beeinflussung der Ausbringrate der Feldspritzventile (oder der Feldspritzventile der unterschiedlichen Gruppen) je nach gewünschter Ausbringrate durch grundsätzlich unterschiedliche Maßnahmen erfolgt:

- Für eine erste Veränderung der Ausbringrate erfolgt eine Veränderung des Tastverhältnisses der Pulsweitenmodulation, während die Frequenz der Pulsweitenmodulation unverändert bleibt.

- Hingegen erfolgt für eine zweite Veränderung der Ausbringrate eine Veränderung der Frequenz der Pulsweitenmodulation, wobei dabei das Tastverhältnis gleich bleiben kann oder ebenfalls geändert werden kann.

Hierbei kann im Rahmen der Erfindung die erste Veränderung der Ausbringrate eine Änderung der Soll-Ausbringrate sein. Alternativ oder kumulativ möglich ist, dass die erste Veränderung verwendet wird, um eine Regelung derart vorzunehmen, dass eine ermittelte Ist-Ausbringrate möglichst exakt der Soll-Ausbringrate entspricht.

Hingegen erfolgt vorzugsweise die zweite Veränderung der Ausbringrate für eine Änderung der Soll-Ausbringrate.

Der Wahl der Frequenz je nach der gewünschten Ausbringrate liegt insbesondere die Erkenntnis zugrunde, dass für große Ausbringraten das Feldspritzventil nur kurze Zeit geschlossen werden muss (d. h. für den Fall eines bestromt offenen Feldspritzventils elektrisch erregt werden muss). Beträgt beispielsweise die Frequenz der Pulsweitenmodulation 25 Hz und ist eine empirisch ermittelte minimale elektrische Ansteuerdauer, bei der reproduzierbare Ausbringmengen erreicht werden, ca. 10 bis 12 ms, entspricht dies einem Tastverhältnis von 25 bis 30 %, was je nach Gestaltung des Feldspritzventils eine Ausbringmenge von ca. 40 bis 45 % gegenüber dem vollständig dauerhaft geöffneten Feldspritzventil entspricht. Sollen noch höhere Ausbringmengen erzielt werden, kann im Rahmen der Erfindung eine kleinere Frequenz der Pulsweitenmodulation verwendet werden. Hingegen erfordern kleine Ausbringmengen eine lange elektrische Ansteuerung des Feldspritzventils. Die Grenze liegt dann bei der benötigten Dauer zum Abbau der gespeicherten magnetischen Energie in der Spule des Feldspritzventils. Eine elektrischen Ansteuerung von ca. 24 ms mit ca. 16 ms Ansteuerphase (Tastverhältnis 60 % bei einer Frequenz von 25 Hz) stellt die praktische Grenze dar, wobei dann je nach Gestaltung des Feldspritzventils die Ausbringmenge auf ca. 15 % gegenüber dem durchgängig geöffneten Feldspritzventil reduziert ist. Eine längere elektrische Ansteuerung, also eine Erhöhung des Tastverhältnisses, erlaubt den Abbau der gespeicherten magnetischen Energie in der Spule des Feldspritzventils nicht mehr, so dass das Feldspritzventil nicht mehr zuverlässig und/oder komplett öffnet oder ein Tröpfeln des Ausbringverhaltens entsteht oder das Feldspritzventil "klebt" und keine Ausbringung mehr erfolgt.

Im Rahmen der Erfindung ist möglich, dass für die Steuerung der Pulsweitenmodulation und den Phasenversatz der einzelnen Feldspritzventile eine zentrale Steuereinheit verantwortlich ist, welche die elektrische Beaufschlagung der Feldspritzventile, insbesondere die Öffnung und die Schließung desselben entsprechend dem aktuellen Tastverhältnis und der aktuellen Frequenz, steuert.

Für einen Vorschlag der Erfindung weisen die Feldspritzventile jeweils einen Timer auf. Um zu vermeiden, dass die Timer der Feldspritzventile unterschiedliche Zeitsignale aufweisen, werden die Timer nach einem vorgegebenen Zeitintervall, beispielsweise 0,5 s, 1 s, 1,5 s, 2 s, 3 s, 10 s miteinander synchronisiert. Auf Grundlage der synchronisierten Timer können dann von den Steuereinheiten der Feldspritzventile die Ventile so angesteuert werden, dass sich der vorgegebene Phasenversatz des Beginns der Perioden der Pulsweitenmodulationen ergibt.

Je nach der Frequenz, mit welcher die Pulsweitenmodulation nach der Synchronisierung durchgeführt wird, befindet sich zum Zeitpunkt der nächsten Synchronisation die Pulsweitenmodulation an einem unterschiedlichen Zeitpunkt innerhalb der Periode der Pulsweitenmodulation. Erfolgt dann die nächste Synchronisierung, führt dies zu einem Sprung der Pulsweitenmodulationen, da infolge der nächsten Synchronisierung eine Periode der Pulsweitenmodulation nicht vollständig durchlaufen wird.

Für den Fall, dass diese Unregelmäßigkeiten, die zu einem unregelmäßigen Ausbringverhalten zum Zeitpunkt der Synchronisierung führen können, unerwünscht sind, kann dies für einen Vorschlag der Erfindung dadurch ausgeschlossen werden, dass die Frequenz der Pulsweitenmodulation so gewählt wird, dass das Zeitintervall, nach dem eine erneute Synchronisierung erfolgt, einem ganzzahligen Vielfachen der Periodendauer der Pulsweitenmodulation entspricht. Dies hat zur Folge, dass zum Zeitpunkt der Synchronisation in jedem Fall die vollständige Periodendauer durchlaufen ist, womit keine Unregelmäßigkeit im Ausbringverhalten auftritt.

Vorzugsweise erfolgt für diese Ausgestaltung eine Veränderung der Frequenz der Pulsweitenmodulation nicht innerhalb der Zeitspanne zwischen zwei Synchronisationen der Timer, sondern vielmehr zu dem Zeitpunkt der Synchronisierung der Timer.

Grundsätzlich können die Zeitpunkte der Öffnung der Feldspritzventile, der Schließung der Feldspritzventile, die Öffnungsdauer, die Schließdauer und das Tastverhältnis der Pulsweitenmodulation vorgegeben werden über die elektronische Beaufschlagung. Hierbei kann für eine Ausführungsform die vereinfachende Annahme getroffen werden, dass die Öffnung des Feldspritzventils zu dem Zeitpunkt der Bestromung desselben erfolgt, während die Schließung des Feldspritzventils zum Zeitpunkt des Entfalls der Bestromung erfolgt. Möglich ist auch, dass ein fest vorgegebene Zeitversätze zwischen der Aufnahme der Bestromung bzw. Beseitigung der Bestromung und dem Öffnungszeitpunkt bzw. Schließzeitpunkt des Feldspritzventils zugrunde gelegt werden.

Der Erfindung zugrunde liegende Untersuchungen haben aber gezeigt, dass das Reaktionsverhalten des Feldspritzventils auf die elektrische Beaufschlagung zwischen den einzelnen Feldspritzventilen variieren kann oder auch für ein Feldspritzventil abhängig von Betriebsparametern (insbesondere der Frequenz der Pulsweitenmodulation, dem Tastverhältnis, einem Grad der Verstopfung, dem eingangsseitigen Druck, der Betriebsstellung einer nachgeschalteten Düseneinheit u. ä.) und/oder der Lebensdauer eines Feldspritzventils variieren kann. Schließlich können auch Fertigungstoleranzen der Feldspritzventile zu voneinander abweichenden Charakteristika derselben führen.

In der vorliegenden Beschreibung wird zwischen einem "elektrischen Tastverhältnis" und einem "mechanischen Tastverhältnis" unterschieden. Hierbei bezeichnet das elektrische Tastverhältnis das Tastverhältnis, welches von der Steuerung für die Ansteuerung des Aktuators vorgegeben wird und sich ergibt aus den vorgegebenen Zeitpunkten, an welchen die Steuerung die Ansteuerung des Aktuators so umschaltet, dass die Öffnung und die Schließung des Feldspritzventils herbeigeführt werden soll. Hingegen bezeichnet das mechanische Tastverhältnis das Tastverhältnis, welches sich tatsächlich infolge der Ansteuerung des Aktuators durch die Steuerung ergibt und aus den Zeitpunkten der mechanischen Öffnung und Schließung des Feldspritzventils ergibt, wobei hierbei auf den Beginn, einen charakteristischen Zeitpunkt oder Weg oder das Ende der Öffnung-und Schließbewegung abgestellt werden kann.

Soll auch in Fällen, in denen das mechanische Tastverhältnis von dem elektrischen Tastverhältnis abweichen kann, eine Erhöhung der Genauigkeit erfolgen, wird für einen Vorschlag der Erfindung in den Feldspritzventilen eine Position oder eine Bewegung eines Ankers (oder eines zugeordneten Ventilkörpers) der Feldspritzventile über einen Sensor erfasst. Hierbei kann die Position oder Bewegung des Ankers mit dem Sensor direkt ermittelt werden, so dass ein Wegsensor, ein Geschwindigkeitssensor, ein Schalter für die Öffnungsstellung und/oder die Schließstellung u. ä. Einsatz finden kann.

Möglich ist für eine Ausführungsform der Erfindung aber auch, dass die Position und/oder Bewegung des Ankers über einen Sensor erfasst wird, der die elektrische Beaufschlagung der Spule, insbesondere einen Stromverlauf in derselben, erfasst. Dieser Ausgestaltung liegt die Erkenntnis zugrunde, dass sich der Verlauf des Stroms in der Spule charakteristisch ändert zu dem Zeitpunkt, an welchem sich der Anker von dem Joch löst oder der Anker seine maximal von dem Joch entfernte Stellung erreicht hat oder seine Bewegung aufnimmt oder seine Bewegung beendet. Aus der Auswertung des Signals des Sensors für den Strom, insbesondere der Detektierung der vorgenannten charakteristischen Änderung, kann der Zeitpunkt der Öffnung und Schließung des Feldspritzventils ermittelt werden.

Auf Grundlage des Signals des Sensors wird dann das mechanische Tastverhältnis ermittelt. Die Erfindung schlägt vor diesem Hintergrund für eine Ausführungsform vor, dass eine Regelung des elektrischen Tastverhältnisses auf Grundlage des ermittelten mechanischen Tastverhältnisses erfolgt.

Dies soll anhand des folgenden, die Erfindung nicht beschränkenden Beispiels erläutert werden: Wird ein elektrisches Tastverhältnis durch die elektrische Ansteuerung der Spule des Feldspritzventils von 50 % ausgesteuert und ergibt die Auswertung des Sensors, dass tatsächlich das mechanische Tastverhältnis 60 % beträgt, erfolgt eine Reduzierung des elektrischen Tastverhältnisses in einem Umfang oder so lange, bis das mechanische Tastverhältnis dem Sollwert von 50 % entspricht.

Vorzugsweise handelt es sich bei den Feldspritzventilen um Feldspritzventile, die ohne eine Bestromung die Öffnungsstellung einnehmen und mit einer Bestromung eine Schließstellung einnehmen. In der Schließstellung kann dann auch ein Haltemagnet Einsatz finden, um die elektrische Leistungsaufnahme zu reduzieren. Weiterhin möglich ist, dass in der Schließstellung ein reduzierter Haltestrom verwendet wird oder sogar ein beispielsweise entsprechend einem Rechtecksignal oszillierender Haltestrom verwendet wird, mit dem trotz der verringerten Leistungsaufnahme das Feldspritzventil seine Schließstellung beibehalten kann. Hinsichtlich einer derartigen Ausgestaltung der Feldspritzventile wird auf den eingangs genannten Stand der Technik verwiesen.

Möglich ist, dass bei beispielsweise vier Feldspritzventilen, die an einem Sprühbalken nebeneinander angeordnet sind, die Feldspritzventile jeweils mit einem um 90° vergrößerten Phasenversatz angesteuert werden. Somit beträgt der Phasenversatz des ersten Feldspritzventils 0°, der Phasenversatz des zweiten Feldspritzventils 90°, der Phasenversatz des dritten Feldspritzventils 180° und der Phasenversatz des vierten Feldspritzventils 270°. Dies kann aber dazu führen, dass sich infolge der von dem ersten Feldspritzventil in Richtung des vierten Feldspritzventils kontinuierlichen Verzögerung infolge des Phasenversatzes für die Ausbringung des Feldes eine Musterbildung mit gegenüber der Fahrtrichtung des Sprühfahrzeugs schrägen Streifen auf dem Feld ergibt. Für einen Vorschlag der Erfindung sind in einer Reihe nebeneinander angeordnete Feldspritzventile bei Betrachtung entlang der Reihe mit Phasenversätzen ausgestattet, die in unterschiedliche Richtungen orientiert sind. So kann beispielsweise der Phasenversatz des ersten Feldspritzventils 0° betragen, der Phasenversatz des zweiten Feldspritzventils 180° betragen, der Phasenversatz des dritten Feldspritzventils 270° betragen und der Phasenversatz des vierten Feldspritzventils 90° betragen. Anders gesagt ist der Phasenversatz unregelmäßig entlang der Reihe der Feldspritzventile verteilt.

Grundsätzlich können beliebige Phasenversätze verwendet werden, wobei die Phasenversätze um dieselbe Differenz oder unterschiedliche Differenzen voneinander abweichen können. Als besonders vorteilhaft hat sich herausgestellt, dass bei dem Einsatz von Feldspritzventilen mit unterschiedlichen Phasenversätzen die mit der Ziffer n durchnummerierten Feldspritzventile mit $1 \leq n \leq N$ einen Phasenversatz von

$$(n - 1) \, 360° \, / \, N + \alpha$$

aufweisen. Hierbei kennzeichnet α einen Grund-Phasenversatz sämtlicher Feldspritzventile. Im einfachsten Fall beträgt α = 0°. Für drei Feldspritzventile (N = 3) und α = 0° ergibt sich für das erste Feldspritzventil ein Phasenversatz von 0°, das zweite Feldspritzventil ein Phasenversatz von 120° und das dritte Feldspritzventil ein Phasenversatz von 240°. Wie zuvor erläutert können dann die so berechneten Phasenversätze unregelmäßig entlang der Reihe der Feldspritzventile angeordnet sein.

Für die Vorgabe der Frequenz der Pulsweitenmodulation und/oder des Tastverhältnisses zur Herbeiführung einer Soll-Ausbringrate der Feldspritzventile gibt es im Rahmen der Erfindung vielfältige Möglichkeiten. Für einen Vorschlag der Erfindung ist in den Steuereinheiten der Feldspritzventile, in einer Master-Steuereinheit eines Feldspritzventils oder in einer übergeordneten Steuereinheit ein Kennfeld abgelegt, über welches bei einer vorgegebenen Soll-Ausbringrate (oder einem Bereich einer Soll-Ausbringrate) die geeignete Frequenz der Pulsweitenmodulation abgelegt ist.

Eine weitere Lösung der der Erfindung zugrunde liegenden Aufgabe stellt eine Feldspritzeinrichtung dar, bei welcher die Feldspritzventile Steuereinheiten aufweisen, die Steuerlogik aufweisen zur Durchführung des zuvor erläuterten Verfahrens.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt beispielhafte Signalverläufe eines angesteuerten Feldspritzventils.

Fig. 2     zeigt beispielhaft und schematisch eine elektrische Ansteuerung von vier Feldspritzventilen mit unterschiedlichen Phasenversätzen.

Fig. 3     zeigt stark schematisiert eine Feldspritzeinrichtung, bei der Feldspritzventile über ein CAN miteinander kommunizieren.

Fig. 4     zeigt schematisch ein Verfahren zum Betrieb einer Feldspritzeinrichtung.

## FIGURENBESCHREIBUNG

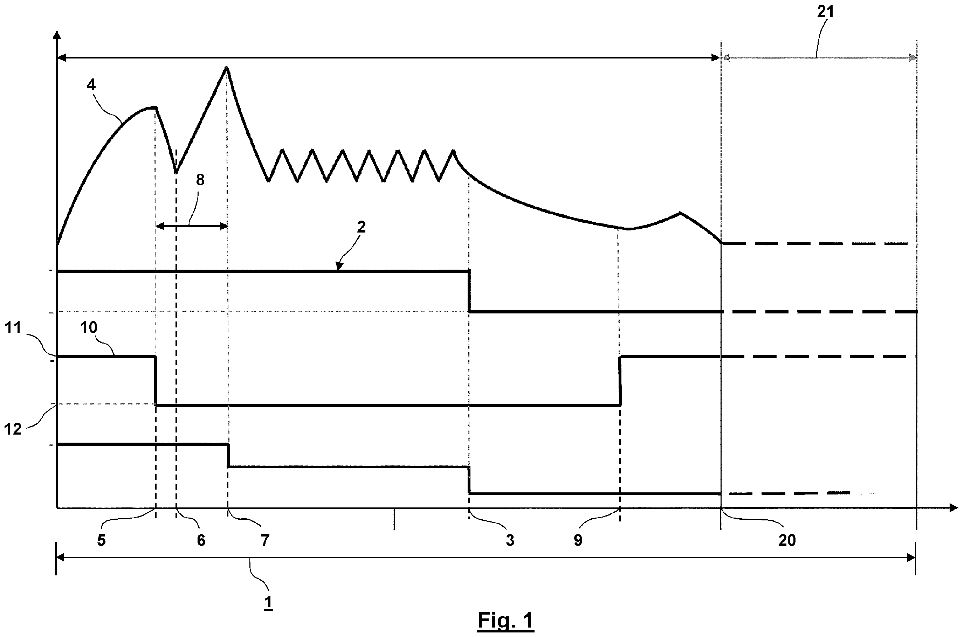

Fig. 1 zeigt schematisch das Verhalten und die Ansteuerung eines Feldspritzventils über eine Periode 1 einer Pulsweitenmodulation. Eine Kurve 2 zeigt ein elektrisches Pulsweitensignal während der Periode 1. Mit Beginn der Periode erfolgt entsprechend der Kurve 2 eine elektrische Beaufschlagung (insbesondere die Spannung), um das Feldspritzventil von der Öffnungsstellung in die Schließführung zu überführen und in der Schließstellung zu halten. Zu einem Zeitpunkt 3 wird die elektrische Beaufschlagung beseitigt. Das elektrische Tastverhältnis bezeichnet das Verhältnis der Zeitspanne bis zum Zeitpunkt 3 zu der Dauer der Periode 1.

Tatsächlich ergibt sich ein gegenüber der Kurve 2 der elektrischen Ansteuerung verzögertes Verhalten des Feldspritzventils. Die Kurve 4 zeigt den Verlauf des Stroms in der Spule, der sich zunächst lediglich langsam aufbaut. Mit dem sich vergrößernden Strom wird der Anker an den Haftmagneten angezogen. Zum Zeitpunkt 5 setzt sich der Anker in Richtung des Haftmagneten in Bewegung, womit die Öffnung des Feldspritzventils erfolgt. Zum Zeitpunkt 6 kommt der Anker zur Anlage an den Haftmagneten. Hieran anschließend steigt der Strom linear an, bis dieser zu einem Zeitpunkt 7 wieder reduziert wird. Hierbei ist insbesondere die Zeitspanne 8 zwischen den Zeitpunkten 5, 7 fest durch die Steuerung vorgegeben. In dem anschließenden Haltebetrieb wird der Strom sägezahnartig hin- und hergeschaltet zwecks Minimierung der elektrischen Leistungsaufnahme bei Gewährleistung des Haltens des Ankers an dem Joch oder Haltemagnet.

Zum Zeitpunkt 3 wird dann die elektrische Beaufschlagung beseitigt. Infolge der in dem elektromagnetischen Kreis gespeicherten Energie fällt die Bestromung aber nicht unmittelbar ab, sondern sinkt wie dargestellt kontinuierlich ab, bis zu einem Zeitpunkt 9 das Feldspritzventil beginnt sich zu öffnen. Mit Einsetzen der Öffnungsbewegung kann sich wie dargestellt auch ein anschließender Anstieg der Kurve 4 ergeben. Eine Kurve 10 zeigt das mechanische Öffnungs- und Schließverhalten des Feldspritzventils, wobei mit 11 die Öffnungsstellung und mit 12 die Schließstellung gekennzeichnet ist.

Über eine Auswertung des Verlaufs der Kurve 4, nämlich eine Ermittlung des Maximums und/oder Knicks für den Zeitpunkt 5 sowie das Minimum zum Zeitpunkt 9 kann eine Ermittlung des Öffnungszeitpunkts und des Schließzeitpunkts des Feldspritzventils erfolgen und somit eine Ermittlung des mechanischen Tastverhältnisses erfolgen.

Werden wie erläutert die Zeitpunkte 5, 9 ermittelt, kann das tatsächliche, mechanische Tastverhältnis exakt ermittelt werden. Wird zunächst das elektrische Tastverhältnis gemäß Kurve 2 von der Steuerung zugrunde gelegt, kann auf Grundlage der Messung eine Regelung des elektrischen Tastverhältnisses erfolgen, indem eine Verschiebung des Zeitpunkts 3 erfolgt, zu welchem die elektrische Beaufschlagung gemäß Kurve 2 beseitigt wird, bis das ermittelte mechanische Tastverhältnis dem mechanischen Soll-Tastverhältnis entspricht und die Soll-Ausbringrate herbeigeführt ist.

Ein Zeitpunkt 20 kennzeichnet den Zeitpunkt, für welchen zunächst eine Periodendauer 1 für eine eingesetzte Frequenz endet. Beträgt diese Frequenz 25 Hz, ist der Zeitpunkt 20 nach 40 ms erreicht. Diese Frequenz kann die höchste Frequenz sein und insbesondere zum Einsatz kommen für kleinere Ausbringraten. Soll hingegen eine größere Ausbringrate ermöglicht werden, die aus den eingangs genannten Gründen (insbesondere wegen der Trägheit des Feldspritzventils) nicht für diese Frequenz ermöglicht werden könnte, wird die Öffnungsdauer des Feldspritzventils verlängert, indem das Feldspritzventil für eine Zeitspanne 21 nicht elektrisch beaufschlagt wird und somit länger in seiner Öffnungsstellung verbleibt. Dies hat letzten Endes zur Folge, dass eine kleinere Frequenz oder größere Periode 1 zum Einsatz kommt und eine Verringerung des Tastverhältnisses erfolgt.

Alternativ oder kumulativ kann eine Veränderung der Ausbringrate erfolgen durch eine Veränderung des nominellen elektrischen Tastverhältnisses, also eine Verschiebung des Zeitpunkts 3.

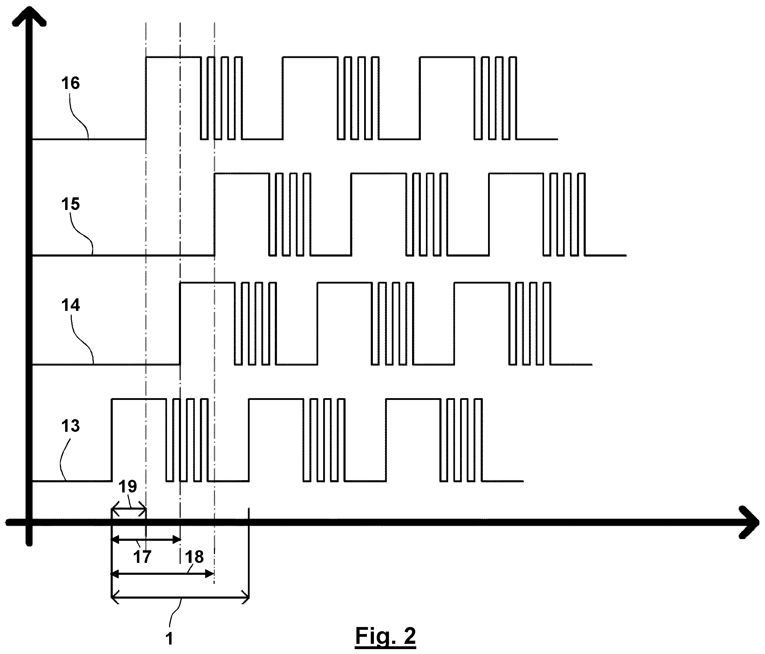

Fig. 2 zeigt schematisiert die elektrische Pulsweitenansteuerung eines ersten Feldspritzventils 13, eines zweiten Feldspritzventils 14, eines dritten Feldspritzventils 15 und eines vierten Feldspritzventils 16, die in dieser Reihenfolge an einem Sprühbalken angeordnet sein können. Hierbei ist die elektrische Beaufschlagung der Feldspritzventile 13 bis 16 qualitativ gleich und weist einen ersten Bereich maximaler Beaufschlagung zur Herbeiführung der Öffnungsstellung, einen anschließenden Bereich mit oszillierender Beaufschlagung für das Halten des Ankers am Haltemagneten und schließlich einen dritten Bereich ohne elektrische Beaufschlagung, in dem das Feldspritzventil seine Schließstellung einnimmt, auf. Das (elektrische) Tastverhältnis ergibt sich hier aus dem Verhältnis der beiden erstgenannten Bereiche zu der Periode 1, die sich aus Summe der Länge der genannten drei Bereiche ergibt. Wie in Fig. 1 zu erkennen ist und ausführlich erläutert wurde, kann das tatsächliche Verhalten signifikant von dieser schematischen Darstellung abweichen.

Die Beaufschlagungssignale der Feldspritzventile 13 bis 16 weisen unterschiedliche Phasenverschiebungen auf: Die Periode 1 des ersten Feldspritzventils 13 weist einen Phasenversatz von 0° auf. Das Beaufschlagungssignal des zweiten Feldspritzventils 14 weist einen Phasenversatz 17 von 180° auf. Die elektrische Beaufschlagung des dritten Feldspritzventils 15 weist einen Phasenversatz 18 von 270° auf. Schließlich weist die elektrische Beaufschlagung des vierten Feldspritzventils 16 einen Phasenversatz 19 von 90° auf. Möglich ist, dass neben diesen vier Feldspritzventilen 13, 14, 15, 16 weitere Feldspritzventile angeordnet sind, deren Phasenversatz dann jeweils den Phasenversätzen der Feldspritzventile 13, 14, 15, 16 entsprechen. In diesem Fall bilden die Feldspritzventile 13 (bzw. die Feldspritzventile 14, 15, 16) eine erste Gruppe (bzw. eine zweite Gruppe, eine dritte Gruppe und eine vierte Gruppe).

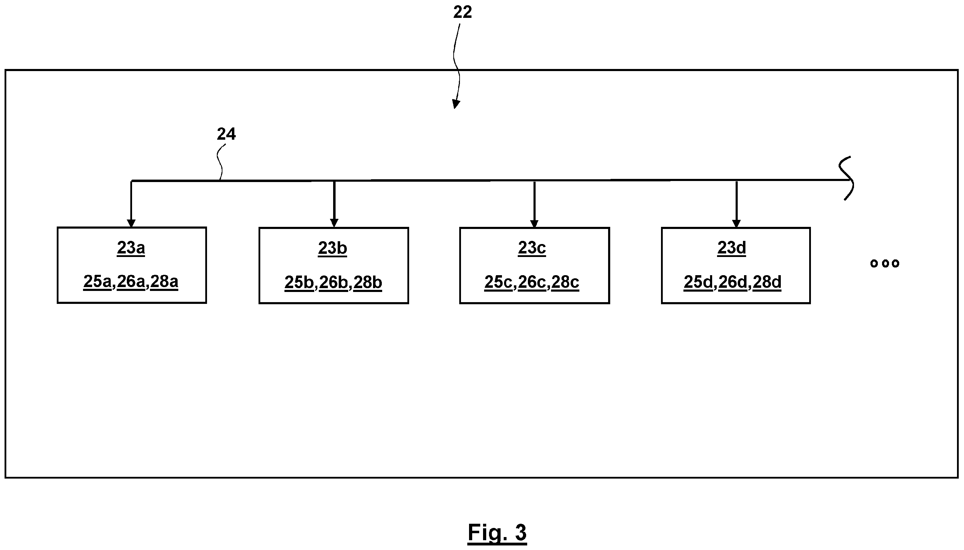

In Fig. 3 sind die Feldspritzventile und die zugeordneten Komponenten mit denselben Bezugszahlen gekennzeichnet, aber durch einen zusätzlichen Buchstaben a, b,... voneinander unterschieden. Auf die Feldspritzventile und die zugeordneten Komponenten kann dann mit oder ohne den zusätzlichen Buchstaben Bezug genommen sein, womit dann ein derartiges Feldspritzventil oder eine zugeordnete Komponente, mehrere oder sämtliche Feldspritzventile und zugeordnete Komponenten gemeint sein können.

In Fig. 3 ist beispielhaft eine Feldspritzeinrichtung 22 dargestellt, die in üblicher Weise mit einem Reservoir für das auszubringende Fluid, einer Pumpe, Ventilen und weiteren fluidischen Komponenten wie Druckbegrenzungsventilen, einer Verzweigung zu Zuführleitungen für mehrere Feldspritzventile 23a, 23b, ..., Abführleitungen usw. in an sich bekannter Weise gebildet ist (vgl. auch den eingangs genannten Stand der Technik). Die Feldspritzventile 23a, 23b, ... kommunizieren über eine Kommunikationsleitung, insbesondere ein Bussystem oder ein CAN 24. Die Feldspritzventile 23 verfügen jeweils über elektronische Steuereinheiten 25 mit Steuerlogik 26, die geeignet programmiert ist für die Durchführung des erfindungsgemäßen Verfahrens.

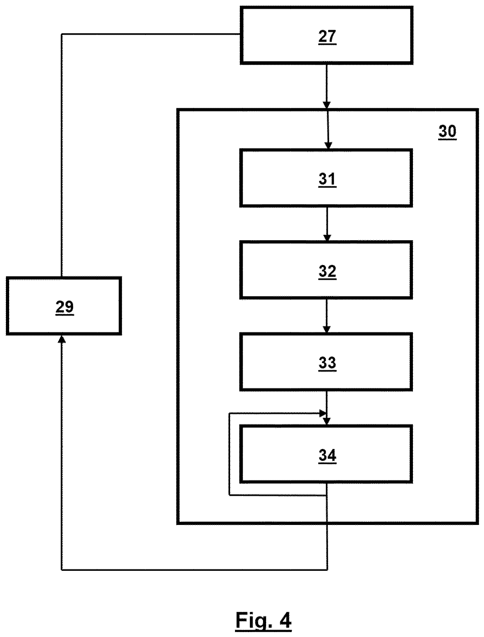

In einem beispielhaften Verfahren zum Betrieb einer Feldspritzeinrichtung 22, wie dieses schematisch in **Fig. 4** dargestellt ist, versendet in einem Verfahrensschritt 27 eine Steuereinheit 25a eines ersten Feldspritzventils 23a über das Bussystem 24 ein Synchronisationssignal an die anderen Feldspritzventile 23b, 23c, ... Bei dem Synchronisationssignal kann es sich um eine definierte CAN-Nachricht handeln mit einer IDEE, die in der Feldspritzeinrichtung 22 die höchste Priorität hat und damit die höchste Wahrscheinlichkeit hat, sofort über das Bussystem 24 gesendet zu werden. Die Feldspritzventile 23 verfügen jeweils über Uhren oder Timer 28. Mit Empfang des Synchronisationssignals passen die Timer 28b, 28c, ... ihre Zeit an den Timer 28a an oder dieser werden auf einen gleichen Referenzwert gesetzt, so dass mit dieser Synchronisation alle Timer 28 synchron laufen. Ein derartiges Synchronisationssignal wird innerhalb eines regelmäßigen Zeitrasters oder nach einer vorbestimmten festen oder variablen Zeitspanne gesendet. Für ein hier erläutertes Beispiel wird davon ausgegangen, dass diese Zeitspanne 29 eine Dauer von 1,04 Sekunden hat.

In den Feldspritzventilen 23 können die Timer 28 auf dem Prozessortakt der Steuereinheiten 25 basieren, der mittels eines Quarzes erzeugt wird. Hierbei kann bspw. die Toleranz der Frequenz des Quarzes zur Vorgabe des Prozessortaktes um 100 ppm ($10^{-4}$ = 0,01 %) betragen. Der maximal zu erwartende Fehler durch die Toleranz des Quarzes über die Zeitspanne 29 für die Synchronisation für das Beispiel von 1,04 sec beträgt dann $1,04 \times 10^{-4}$ = 104 $\mu$s.

In der Software kann der Timer 28 als Zähler mit einem Zähltakt von 125 $\mu$s realisiert sein. Dieser Zähler durchläuft während der Zeitspanne 29 von 1,04 sec 8.320 Schritte. Die Wahl der genannten Zeitspanne und der damit verbundenen Schritte in Abhängigkeit von dem Zähltakt hat einerseits den Vorteil, dass die Abweichung der Timer 28 durch die Toleranz des Quarzes in der Zeitspanne 29 kleiner als 1 Zählschritt ist. Andererseits ergeben sich für 8.320 Schritte sinnvolle gradzeilige Teiler zur Realisierung der Frequenzen für die Pulsweitenmodulation.

Möglich ist, dass eine Synchronisation erfolgt, wenn der Wert des Zählers 0 ist. Vorzugsweise erfolgt allerdings eine Synchronisierung bei einem vorbestimmten Zählerwert (bspw. Zählerstand 40), so dass mit dem Empfang des Synchronisationssignals die Zähler der Timer 28 auf den vorbestimmten Zählerwert gesetzt werden. Der vorbestimmte Zählerwert wird dabei so gewählt, dass bei diesem Zählerwert bei keiner der hier gewählten Frequenzen der Pulsweitenmodulationen und keiner gewählten Phasenverschiebung ein Schaltvorgang der Pulsweitenmodulation zu erwarten ist, so dass durch die Synchronisierung keine Doppel-Ansteuerungen oder fehlenden Schaltvorgänge der Pulsweitenmodulation zu erwarten sind.

Für ideal laufende Timer 28 und ideale Signalübertragung und -verarbeitung erfolgt der Empfang des Synchronisationssignals für sämtliche Timer 28 bei einem demselben vorbestimmten Zählerwert, der damit nicht modifiziert werden muss. Bei kleinen Abweichungen des Zählerwerts zum Zeitpunkt des Empfangs des Synchronisierungssignals wird der Zähler um 1 erhöht oder verringert, je nach der Richtung der Abweichung. Dadurch wirken sich einzelne Verzögerungen des Synchronisationssignals beispielsweise durch eine hohe Last auf dem Bussystem 24 oder andere Störungen des Bussystems nur minimal aus, während gleichzeitig im Normalfall die Zeit trotzdem synchron gehalten werden kann. Eine vollständige Synchronisation erfolgt dann u. U. erst nach mehreren Zeitspannen 29 sukzessive mit jeweils kleinen Anpassungen für jeden Synchronisationsvorgang. Hingegen wird für größere Abweichungen (beispielsweise für ein Abweichen des Zählerwerts um mehr als 50 Zählerschritte für vier aneinander anschließende Synchronisationsvorgänge) wird eine Re-Synchronisierung durchgeführt, indem der Zählerwert auf den vorbestimmten Zählerwert gesetzt wird. Größere Abweichungen können beispielsweise auftreten, wenn durch erstmaliges Einschalten, eine Spannungsunterbrechung oder ein Software-Update der normale Ablauf gestört ist.

In einem Verfahrensschritt 30 werden dann die geeigneten Parameter für die Pulsweitenmodulation der Feldspritzventile 23 ermittelt.

Hierzu wird zunächst in einem Verfahrensschritt 31 die Soll-Ausbringrate ermittelt, die für sämtliche Feldspritzventile 23 gleich sein kann oder jeweils spezifisch für jedes Feldspritzventil 23 ermittelt werden kann. Die Soll-Ausbringrate kann beispielsweise abhängen von der Geschwindigkeit des Sprühfahrzeugs, dem Kurvenradius des jeweiligen Feldspritzventils 23 bei einer Kurvenfahrt des Sprühfahrzeugs und/oder von dem Ernteergebnis bei der letzten Ernte abhängig von GPS-Koordinaten oder auf Grundlage einer Erkennung des Bodens und einer Ermittlung der erforderlichen Ausbringrate anhand des Ergebnisses der Erkennung des Bodens oder auch anhand der Erkennung einer Pflanze oder eines Gewächses im Bereich des Bodens (insbesondere je nach Unterscheidung der Art der Pflanze oder des Gewächses, der Größe, Reduzierung der Ausbringrate zwischen den Pflanzen oder im Bereich von Unkraut).

In einem Verfahrensschritt 32 wird dann unter Rückgriff auf ein Kennfeld ermittelt, mit welcher Frequenz der Pulsweitenmodulation die ermittelte Ausbringrate am besten realisiert werden kann.

Die folgende Tabelle bspw. das folgende Kennfeld gibt Möglichkeiten einzusetzender Frequenzen für die Pulsweitenmodulation an:

| Zahl der Perioden der Pulsweitenmodulation 1 während einer Zeitspanne 29 von 1,04 sec für die Synchronisation | Frequenz der Pulsweitenmodulation | Zahl der Zählschritte in Einzelschritten der Zeitdauer 125 µs | Zahl der zu addierenden Zählerschritte zur Realisierung einer Phasenverschiebung | | | |
|---|---|---|---|---|---|---|
| | | | 0° | 90° | 180° | 270° |
| 26 | 25,000 | 320 | 0 | 80 | 160 | 240 |
| 20 | 19,231 | 416 | 0 | 104 | 208 | 312 |
| 16 | 15,385 | 520 | 0 | 130 | 260 | 390 |
| 13 | 12,500 | 640 | 0 | 160 | 320 | 480 |
| 10 | 9,615 | 832 | 0 | 208 | 416 | 624 |
| 8 | 7,692 | 1040 | 0 | 260 | 520 | 780 |

In einem Verfahrensschritt 33 kann dann aus einem Kennfeld, vgl. die obige Tabelle, der Phasenversatz, der hier in Form von Zählschritten realisiert ist, entnommen werden, um den eingangs erläuterten Versatz des Betriebes der Feldspritzventile 23 zu realisieren, wie dieser insbesondere in Fig. 2 dargestellt ist. Die Realisierung erfolgt hierbei durch Verschiebung der Zählerstände um den in der obigen Tabelle angegebenen Zählerwert.

Die in obiger Tabelle angegebenen Frequenzen der Pulsweitenmodulation ergeben jeweils einen zur Zeitspanne 29 der Synchronisierung gradzeilige Teiler und sind zusätzlich ganzzahlig durch vier teilbar, um die vier unterschiedlichen Phasenverschiebungen präzise realisieren zu können.

Es erfolgt dann in dem Verfahrensschritt 34 die Pulsweitenmodulation der Feldspritzventile 23 mit der in dem Verfahrensschritt 32 ermittelten Frequenz und dem in dem Verfahrensschritt 33 ermittelten Phasenversatz, der für die Feldspritzventile 23 jeweils spezifisch ist, wobei aber das erste Feldspritzventil, das fünfte Feldspritzventil, das neunte Feldspritzventil usw. denselben Phasenversatz von beispielsweise 0° aufweisen können, während das zweite Feldspritzventil, das sechste Feldspritzventil, das zehnte Feldspritzventil usw. gemeinsam einen Phasenversatz von 180° aufweisen können und das dritte, siebte, elfte usw. Feldspritzventil einen Phasenversatz von 90° aufweisen sowie das vierte, achte, zwölfte usw. Feldspritzventil einen Phasenversatz von 270° aufweisen können. Möglich natürlich auch eine andere Verteilung der Phasenversätze über die unterschiedlichen Gruppen der Feldspritzventile.

Möglich ist, dass während der Pulsweitenmodulation innerhalb der Zeitspanne 29 auch eine Regelung des Ausbringverhaltens erfolgt, wozu vorzugsweise die Zeitpunkte 5, 9, die aus der Kurve 4 gemäß Fig. 1 ermittelt werden, herangezogen werden.

Für sämtliche sinnvoll einsetzbaren Frequenzen und Phasenverschiebungen muss gewährleistet werden, dass die elektrische Ansteuerung während der Pulsweitenmodulation so erfolgt, dass das angestrebte vollständige Öffnen und Schließen des Feldspritzventils 23 erfolgt. Hierbei ergeben sich Grenzen durch die Ventilmechanik, die Massenträgheit der Ventilelemente, fluidische Wechselwirkungen und die in der Spule gespeicherte Energie.

Für große Ausbringmengen muss das Feldspritzventil 23 nur kurze Zeit geschlossen werden, d. h. elektrisch erregt werden. Die empirisch ermittelte minimale elektrische Ansteuerdauer, bei der reproduzierbar Ausbringmengen erreicht werden können, liegt bei ca. 10 bis 12 ms, was bei einem Tastverhältnis von 25 bis 30 % bei einer Frequenz von 25 Hz eine Ausbringmenge von 40 bis 45 % des permanent geöffneten Feldspritzventils 23 entspricht. Größere Ausbringmengen können hingegen erzielt werden, indem die elektrische Ansteuerung von 10 bis 12 ms mit einer längeren Pause während der Zeitspanne 21 kombiniert wird, was letzten Endes zu einer Verringerung der Frequenz der Pulsweitenmodulation führt.

Kleine Ausbringmengen erfordern eine lange elektrische Ansteuerung des Ventils. Die Grenze liegt hier in der benötigten Dauer zum Abbau der in der Spule gespeicherten magnetischen Energie. Eine elektrische Ansteuerung von ca. 24 ms mit ca. 16 ms Ansteuerphase (Tastverhältnis der Pulsweitenmodulation 60 % bei 25 Hz) stellt hier die praktische Grenze dar. Der Durchfluss wird in diesem Fall auf etwa 15 % gegenüber dem permanent geöffneten Feldspritzventil 23 reduziert.

Eine längere elektrische Ansteuerung erlaubt den Abbau der gespeicherten magnetischen Energie in der Spule nicht mehr, so dass das Feldspritzventil nicht mehr komplett öffnet und entweder ein tröpfelndes Spritzbild entsteht oder das Feldspritzventil 23 "klebt" und gar nichts mehr ausbringt.

Durch das hier beispielhaft erwähnte Ansteuerschema (kleine Ausbringraten bei einer Frequenz der Pulsweitenmodulation von 25 Hz, große Ausbringraten mit einer Ansteuerung im Bereich von 12 ms und verlängerter Zeitspanne 21) spielt sich der aktive Bereich der Ansteuerung mit dem Schließen und dem Öffnen des Ventils stets im Zeitbereich kleiner ms entsprechend 320 Zeitschritten von jeweils 125 μs ab.

Die erfindungsgemäßen Ausgestaltungformen können beispielsweise auch Einsatz finden im Zusammenhang mit den eingangs angeführten, aus dem Stand der Technik bekannten Feldspritzventilen und Feldspritzeinrichtungen und/oder den Verfahren zum Betrieb derselben, wie diese in diesem Stand der Technik beschrieben sind.

## BEZUGSZEICHENLISTE

| 1 | Periode der Pulsweitenmodulation |
| 2 | Kurve |
| 3 | Zeitpunkt |
| 4 | Kurve |
| 5 | Zeitpunkt |
| 6 | Zeitpunkt |
| 7 | Zeitpunkt |
| 8 | Zeitspanne |
| 9 | Zeitpunkt |
| 10 | Kurve |
| 11 | Öffnungsstellung |
| 12 | Schließstellung |
| 13 | erstes Feldspritzventil |
| 14 | zweites Feldspritzventil |
| 15 | drittes Feldspritzventil |
| 16 | viertes Feldspritzventil |
| 17 | Phasenversatz |
| 18 | Phasenversatz |
| 19 | Phasenversatz |
| 20 | Zeitpunkt |
| 21 | Zeitspanne |
| 22 | Feldspritzeinrichtung |
| 23 | Feldspritzventil |
| 24 | Bussystem, CAN |
| 25 | elektronische Steuereinheit |
| 26 | Steuerlogik |
| 27 | Verfahrensschritt |
| 28 | Uhren, Timer |
| 29 | Zeitspanne |
| 30 | Verfahrensschritt |
| 31 | Verfahrensschritt |
| 32 | Verfahrensschritt |
| 33 | Verfahrensschritt |
| 34 | Verfahrensschritt |

**Patentansprüche**

1. Verfahren zum Betrieb einer Feldspritzeinrichtung (22) mit mehreren elektronisch gesteuerten Feldspritzventilen (23), die jeweils mittels einer Pulsweitenmodulation betrieben werden, **gekennzeichnet durch** die folgenden Verfahrensschritten:

   a) Betreiben von mindestens zwei Feldspritzventilen (23a, 23b, ...) mit einem vorgegebenen Phasenversatz des Beginns der Perioden der Pulsweitenmodulation und

   b) Beeinflussung der Ausbringrate der Feldspritzventile (23a, 23b, ...)

      ba) für eine erste Veränderung der Ausbringrate durch Veränderung des Tastverhältnisses der Pulsweitenmodulation bei derselben Frequenz der Pulsweitenmodulation

bb) für eine zweite Veränderung der Ausbringrate durch Veränderung der Frequenz der Pulsweitenmodulation.

2. Verfahren nach Anspruch 1, **dadurch gekennzeichnet, dass**

a) die Feldspritzventile (23) jeweils einen Timer (28) aufweisen,
b) die Timer (28) der Feldspritzventile (23) nach einem vorgegebenen Zeitintervall miteinander synchronisiert werden,
c) auf Grundlage der synchronisierten Timer (28) dann das Betreiben der mindestens zwei Feldspritzventilen (23) mit einem vorgegebenen Phasenversatz des Beginns der Perioden der Pulsweitenmodulationen erfolgt und
c) die Frequenz der Pulsweitenmodulation so gewählt wird, dass das Zeitintervall einem ganzzahligen Vielfachen der Periodendauer der Pulsweitenmodulation entspricht.

3. Verfahren nach einem der vorhergehenden Ansprüche, **dadurch gekennzeichnet, dass** die Veränderung der Frequenz der Pulsweitenmodulation durch den Zeitpunkt der Synchronisierung der Timer (28) ausgelöst wird.

4. Verfahren nach einem der vorhergehenden Ansprüche, **dadurch gekennzeichnet, dass**

a) die Position und/oder Bewegung eines Ankers der Feldspritzventile (23) über einen Sensor erfasst wird,
b) aus dem Signal des Sensors ein mechanisches Tastverhältnis ermittelt wird und
c) eine Regelung des elektrischen Tastverhältnisses auf Grundlage des ermittelten mechanischen Tastverhältnisses erfolgt.

5. Verfahren nach einem der vorhergehenden Ansprüche, **dadurch gekennzeichnet, dass** die Feldspritzventile (23) ohne eine Bestromung eine Öffnungsstellung einnehmen und mit einer Bestromung eine Schließstellung einnehmen, wobei vorzugsweise in der Schließstellung ein reduzierter oder oszillierender Haltstrom oder Haltespannung erzeugt wird.

6. Verfahren nach einem der vorhergehenden Ansprüche, **dadurch gekennzeichnet, dass** in einer Reihe nebeneinander angeordnete Feldspritzventile (23) bei Betrachtung entlang der Reihe Phasenversätze aufweisen, die in unterschiedliche Richtungen orientiert sind.

7. Verfahren nach einem der vorhergehenden Ansprüche, **dadurch gekennzeichnet, dass** N Feldspritzventile (23) vorhanden sind, wobei die Feldspritzventile n mit $1 \leq n \leq N$ einen Phasenversatz von

$$(n - 1) \, 360° \, / \, N + \alpha$$

aufweisen.

8. Verfahren nach einem der vorhergehenden Ansprüche, **dadurch gekennzeichnet, dass** für die Herbeiführung einer Soll-Ausbringrate die Frequenz der Pulsweitenmodulation aus einem Kennfeld ermittelt wird.

9. Feldspritzeinrichtung (22) mit Feldspritzventilen (23), die jeweils eine elektronische Steuereinheit (25) aufweisen, **dadurch gekennzeichnet, dass** die Steuereinheiten (25) Steuerlogik für eine Durchführung eines Verfahrens nach einem der Patentansprüche 1 bis 8 aufweisen.

**Claims**

1. Method for operating a field sprayer device (22) comprising a plurality of electronically controlled field sprayer valves (23) which are each operated with a pulse width modulation, **characterised by** the following method steps:

a) operating of at least two field sprayer valves (23a, 23b, ...) with a predefined phase shift at the beginning of periods of the pulse width modulation and
b) adjusting the output rate of the field sprayer valves (23a, 23b, ...)

ba) for a first adjustment of the output rate by a change of the duty factor of the pulse width modulation with the same frequency of the pulse width modulation

bb) for a second change of the output rate by a change of the frequency of the pulse width modulation.

2. Method of claim 1, **characterised in that**

a) the field sprayer valves (23) each comprise a timer (28),
b) the timers (28) of the field sprayer valves (23) are synchronized with each other after a predefined time interval,
c) on the basis of the synchronized timers (28) then the at least two field sprayer valves (23) are operated with a predefined phase shift at the beginning of the periods of the pulse width modulation and
c) the frequency of the pulse width modulation is chosen such that the time interval corresponds to an integer multiple of the cycle duration of the pulse width modulation.

3. Method of one of the preceding claims, **characterised in that** the change of the frequency of the pulse width modulation is triggered by the point in time of the synchronization of the timers (28).

4. Method of one of the preceding claims, **characterised in that**

a) the position and/or movement of an armature of the field sprayer valves (23) is sensed by a sensor,
b) a mechanical duty factor is determined from the signal of the sensor and
c) the electrical duty factor is controlled on the basis of the determined mechanical duty factor.

5. Method of one of the preceding claims, **characterised in that** the field sprayer valves (23) are in an open position without an energization and in a closed position with an energization, wherein preferably in the closed position a reduced or oscillating holding current or holding voltage is generated.

6. Method of one of the preceding claims, **characterised in that** field sprayer valves (23) arranged in a row one besides the other comprise phase shifts which when seen along the row have orientations in different directions.

7. Method of one of the preceding claims, **characterised in that** N field sprayer valves (23) are provided wherein the field sprayer valves n with $1 \leq n \leq N$ have a phase shift of

$$(n - 1)\, 360° / N + \alpha\,.$$

8. Method of one of the preceding claims, **characterised in that** for achieving a target output rate the frequency of the pulse width modulation is determined from a characteristic map.

9. Field sprayer device (22) comprising field sprayer valves (23) each comprising an electronic control unit (25), **characterised in that** the control units (25) comprise control logic for executing a method of one of claims 1 to 8.

**Revendications**

1. Procédé de fonctionnement d'un dispositif de pulvérisation agricole (22) avec plusieurs soupapes de pulvérisation agricole (23) contrôlées électroniquement, qui sont actionnées chacune au moyen d'une modulation de largeur d'impulsion, **caractérisé par** les étapes suivantes :

a) fonctionnement d'au moins deux soupapes de pulvérisation agricole (23a, 23b...) avec un déphasage prédéterminé du début des périodes de la modulation de largeur d'impulsion et
b) contrôle du débit des soupapes de pulvérisation agricole (23a, 23b...)

ba) pour une première modification du débit par la modification du rapport cyclique de la modulation de largeur d'impulsion à la même fréquence de modulation de largeur d'impulsion
bb) pour une deuxième modification du débit par la modification de la fréquence de la modulation de largeur d'impulsion.

2. Procédé selon la revendication 1, **caractérisé en ce que**

a) les soupapes de pulvérisation agricole (23) comprennent chacune un minuteur (28),

b) les minuteurs (28) des soupapes de pulvérisation agricole (23) sont synchronisés entre eux après un intervalle de temps prédéterminé,

c) sur la base des minuteurs (28) synchronisés, a lieu ensuite l'actionnement des au moins deux soupapes de pulvérisation agricole (23) avec un déphasage prédéterminé du début des périodes de la modulation de largeur d'impulsion et

d) la fréquence de la modulation de largeur d'impulsion est choisie de sorte que l'intervalle de temps correspond à un multiple entier de la durée de la période de la modulation de largeur d'impulsion.

3. Procédé selon l'une des revendications précédentes, **caractérisé en ce que** la modification de la fréquence de la modulation de largeur d'impulsion est déclenchée par le moment de la synchronisation des minuteurs (28).

4. Procédé selon l'une des revendications précédentes, **caractérisé en ce que**

a) la position et/ou le déplacement d'un ancrage des soupapes de pulvérisation agricole (23) est détecté par l'intermédiaire d'un capteur,

b) à partir du signal du capteur, un rapport cyclique mécanique est déterminé et

c) une régulation du rapport cyclique électrique a lieu sur la base du rapport cyclique mécanique.

5. Procédé selon l'une des revendications précédentes, **caractérisé en ce que** les soupapes de pulvérisation agricole (23) adoptent, sans alimentation en courant, une position d'ouverture et, avec une alimentation en courant, une position de fermeture, dans lequel, de préférence, dans la position de fermeture, un courant ou une tension de maintien réduite ou oscillante est générée.

6. Procédé selon l'une des revendications précédentes, **caractérisé en ce que** les soupapes de pulvérisation agricole (23), disposées de manière juxtaposée dans une rangée, présentent, vues le long de la rangée, des déphasages qui sont orientés dans différentes directions.

7. Procédé selon l'une des revendications précédentes, **caractérisé en ce que** N soupapes de pulvérisation agricole (23) sont prévues, dans lequel les soupapes de pulvérisation agricole n, avec $1 \le n \le N$, présentent un déphasage de

$$(n\text{-}1)\ 360° / N + \alpha.$$

8. Procédé selon l'une des revendications précédentes, **caractérisé en ce que**, afin d'obtenir un débit de consigne, la fréquence de la modulation de largeur d'impulsion est déterminée à partir d'un diagramme caractéristique.

9. Dispositif de pulvérisation agricole (22) avec des soupapes de pulvérisation agricole (23), qui comprennent chacune une unité de commande électronique (25), **caractérisé en ce que** les unités de commande (25) comprennent une logique de commande pour une exécution d'un procédé selon l'une des revendications 1 à 8.

Fig. 1

EP 4 080 315 B1

Fig. 2

EP 4 080 315 B1

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009001532 A1
- DE 69625914 T2
- US 2020353494 A
- DE 102013101460 A1
- EP 2227949 A1
- EP 2979765 B1
- WO 2020035443 A1
- DE 102011000921 B3